# EUROPEAN PATENT SPECIFICATION

(11) **EP 4 426 954 B1**
(45) Date of publication and mention of the grant of the patent: **30.07.2025**
(21) Application number: 22802511.0
(22) Date of filing: 01.11.2022
(51) Int. Cl.: F16B 5/02, E04B 1/00, F16B 25/00, F16B 25/10, F16B 35/06

(54) **SCREW, ITS USE AND A METHOD FOR FASTENING WORKPIECES AND DECKING A TERRACE**
SCHRAUBE, DEREN VERWENDUNG UND VERFAHREN ZUR BEFESTIGUNG VON WERKSTÜCKEN UND ZUR ABDECKUNG EINER TERRASSE
VIS, SON UTILISATION ET PROCÉDÉ DE FIXATION DE PIÈCES SUR UNE TERRASSE ET DE POSE DE CELLE-CI

(30) Priority: 02.11.2021 US 202163274603 P; 02.11.2021 DK PA202170536; 02.11.2021 DK PA202170537
(43) Date of publication of application: 11.09.2024
(73) Proprietor: Dissing A/S, 8660 Skanderborg (DK)
(72) Inventor: DISSING, Claus Hornstrup, 8680 Ry (DK)
(74) Representative: Patrade A/S
(86) International application number: PCT/DK2022/050229
(87) International publication number: WO 2023/078518

(56) References cited:
- EP-A1- 3 569 877
- DE-A1- 1 475 049
- US-A- 4 568 229
- US-A1- 2018 100 534

## Description

### FIELD OF THE INVENTION

The present invention relates to a screw, its use, and a method for fastening plastic or wood plastic composite workpieces, especially panels, to a support, in particular wooden support structure. The present invention relates also a method for decking a terrace or balcony by panels.

The present invention relates to a screw according to claim 1, a use of the screw according to claim 12, a method of fastening a workpiece according to claim 13 and a method of decking a terrace or balcony according to claim 15.

### BACKGROUND OF THE INVENTION

For insulation panels, where an insulation material is located between two metal sheets, it is customary to provide screws with a drill point in order to drill the screw through the metal layers before it grips into the underlying roof or wall structure, typical wooden structure.

An example of a screw for such insulation panels is disclosed in US patent No. US4568229. The screw comprises a largely conical drill point which is centred about the central axis of the screw. The drill point comprises two sets of cutting edges. The foremost, primary set of cutting edges meet in a foremost tip that is slightly off-centred from the central axis. The disclosure reads that the screw drills faster through metal sheets, due to the foremost tip of the drill point being slightly off-centred. During screwing, the eccentric tip enters the metal first, after which the remaining conical drill point will work its way through the metal by first primary and subsequently the secondary cutting edges reaming their way through the metal sheet.

German publication DE2913482 discloses a different screw for metal sheets, where the foremost tip portion is slightly off-centred in order to prevent the screw from moving away from the desired hole location.

US7214019 discloses a self-tapping screw with an eccentric bore tip. When the screw has been screwed through a panel of a brittle material and reaches the metallic underlayer, the eccentric tip leads to a wobbling of the screw before the screw is drilled through the metal layer on the opposite side of the brittle material. This wobbling creates a broad hole in the brittle material panel, so that the panel can move around the screw without breaking when temperatures change.

DE1475049A1 discloses a self-drilling metal screw with skew tip for efficient drilling into metal sheets.

US2018/100534A1 discloses a screw having a hybrid self-drilling tip or drill tip including a first tapered tip portion connected at a first end to the shank and at a second end to a second tapered tip portion, where the second tapered tip portion terminates in a pointed end. The outer diameters of both tapered portions taper radially inwardly moving in the direction of the pointed end. This screw is disclosed suitable for attachment to wood as well as for fastening two metal objects to one another.

Typically, however, screws that are for drilling through metal sheets for various purposes have not been proposed for screwing into wood because a centered drill point has proven to be very efficient for wood. Screws with centered tips are also typically used for polymer panels, even tough materials, as described in the following.

Durable polymer panels are often used for outdoor constructions. In particular, due to material toughness, weatherability, and longevity, panels made from wood-plastic composites, WPC, are popular for outdoor flooring. Typically, the panels made from such material are fastened by screws to a support structure of wooden bars. The screws have to be constructed such that they maintain a good grip in the wooden support. A way to provide long term stability of screws can be achieved by drilling holes through the panels and then insert the screw through the holes and into the underlying wood. However, this requires two working steps, which is not desired for quick construction. In order to reduce time and effort when laying down the panels, screws are desired which have a drill point at the front end so that they can be drilled through the panel and then screwed into the underlying wooden support structure. However, drilling a screw through the tough WPC material is often difficult, as screws get heated. Additionally, pressing material aside when screwing may result in lifting of the material around the drilled hole.

Accordingly, screw-drilling through WPC panels has turned out to be a challenge, and many screws do not fulfil the purpose satisfactory.

In order to overcome some of the challenges with WPC panels, screws have been disclosed in the prior art that deviate from more traditional types of screws. Some of such examples are disclosed in the patents US 8,926,249 and US 9,103,364, where screws have a triangular cross-sectional shape. Although, fulfilling the needs, such screws are complex and expensive in fabrication.

Seeing that the number of screws for fastening WPC flooring is large, there is a need for a drilling screw that functions well but can be provided at lower cost. Accordingly, there is a general need for more cost-effective screws that can be drilled through WPC panels and fasten the panels in a satisfactory way to the underlying wooden support structure, in particular without elevations around the screw hole when the screw head is countersunk into the material.

### DESCRIPTION / SUMMARY OF THE INVENTION

It is therefore an objective of the invention to provide an improvement in the art. In particular, it is an objective to provide an improved screw and method for fastening wood-plastic-composite, WPC, panels to a support structure made of wood. It is a further objective to provide an improved method for decking a terrace or balcony by fastening plastic panels or plastic composite panels. It is a further objective to provide a screw that is simple to produce and which involves low production costs. These objectives are achieved by a screw and method as described in the following description and in the claims. In particular, for drilling though wood-plastic composites, and for drilling through decking panels made of plastic with or without reinforcing material in a plastic matrix, a screw is provided with a drill point having an eccentric tip. Further advantages will appear from the following description.

Primarily, the screw presented herein is configured for drilling and screwing into and through a workpiece of a wood plastic composite, WPC, which puts substantial requirements to the drill-ability of the drill point at the front end of the screw. WPC panels contain wood fibers as a reinforcing material in a plastic matrix.

This requires, on the one hand a good penetration capacity by the tip of the screw through the polymer matrix, despite substantial thickness, a subsequent good grip and screwing capability into the underlying wooden structure, as well as proper countersinking capabilities in the fibrous composite.

As will appear from the following, the screw is particularly useful for decking a terrace or balcony by plastic panels, especially plastic composite panels on a support structure, typically wooden support structure.

However, although, the screw is particularly useful for outdoor WPC flooring, the screw is universal and can also be used for vertically oriented or inclined WPC panels. Examples are facade coverings.

Similar to other prior art screws, the screw has a central longitudinal axis and comprises a stem, for example circular cylindrical stem, with a screw head at a first end and a drill point at an opposite second end and a first thread around the stem, wherein the first thread is adjacent to the drill point and configured for screwing into and through the workpiece and a potential underlying support structure after pre-drilling with the drill point. The drill point comprises a foremost tip for initial workpiece contact during start of drilling and screwing into the workpiece.

However, in contrast to prior art screws used for WPC panels, the tip is eccentrically displaced from the central axis. As already discussed above, eccentric drill points have not yet been used for screwing through WPC panels for fastening such panels, especially outdoor panels for decking a terrace, to an underlying support structure made of wood. In experiments, however, screws with eccentric tip have proven particularly advantageous for drilling into WPC panels.

In practice, a support structure made of wood, is provided, and the panel is placed against the support structure. A screw provided with a length larger than the thickness of the panel and drilled through the panel with a portion of the first thread into the underlying wood structure and the panel fastened onto the support structure by the first thread, while the screw head pulls the panel towards the support structure. As an option, the screw is advanced until the head is countersunk in the panel.

The drill point comprises a cutting edge extending from the tip to the stem and a cutting face extending from the cutting edge inwards towards an inner part of the drill point.

The cutting face is planar and parallel to the central axis and extends laterally from the cutting edge radially inwards towards the central axis so as to follow a plane parallel to the central axis and containing the central axis.

In some embodiments, the cutting edge extends to the central axis, while in others, it extends towards the central axis but does not reach the central axis. In even further embodiment, it crosses the central axis and extends to the opposite side of the central axis.

The cutting face is forming a first side of a longitudinal slot in the drill point and is configured for working the workpiece during drilling and screwing of the screw in the workpiece.

A curved outer surface is tapering from the stem to the tip, typically smoothly tapering. For example, the outer surface is formed as a part of an oblique circular cone. Alternatively, the curved outer surface is tapering along concave or convex curves from the stem to the foremost tip.

Advantageously, the convex tapering surface extends over an angle of no less than 225 degrees and no more than 330 degrees, for example no less than 240 degrees and/or no more than 315 degrees, about the central axis as measured from the cutting edge. In experiments, an angle within this range has been found useful.

A second face is extending from the curved outer surface to the cutting face and forming a second side of the slot. Accordingly, the drill point is formed by the longitudinal slot and the convex tapering smoothly curved surface, for example circular oblique conical surface, where the curve bends about the central axis from the cutting edge and to the second face of the longitudinal slot. The term longitudinal slot is here used because the slot extends to the tip in the longitudinal direction of the screw.

Optionally, the transition between the second face and the convex tapering curved surface, for example circular oblique conical surface, is smooth. Alternatively, an edge is provided as a transition between the second face and the tapering curved surface.

It has turned out that the screw very efficiently drills into WPC panels. In particular, especially in comparison with the prior art, the drill point is simple and only needs a single tip and a single cutting face. Experiments have even shown that a single tip is advantageous relatively to those screws that have two tips of a pair of identical cutting edges at the front, as symmetry in the drill point increases the risk of plastic being caught at the tip and melting due to friction, which takes away the drilling efficacy.

In embodiments especially useful for WPC panels, the screw comprises a second thread between the first thread and the screw head, the second thread having a helical direction opposite to the first thread. Whereas the first thread is used for screwing the screw into and through the workpiece, such as panel, this second thread is configured and used for pulling material from the drilled hole, including reinforcing fibers, deeper into the workpiece during screwing of the screw through the workpiece. Advantageously, the second thread has an outer diameter larger than the outer diameter of the first thread.

In those cases where the head should be countersunk, the material pressed into the workpiece has to be accumulated in the hole, as it otherwise is pressed to the side and creates unwanted elevations around the screw head. To provide such space inside the hole for accommodating the material, the stem optionally comprises a region without thread between the head and the second thread, where the region has a diameter smaller than the outer diameter of the second thread. Typically, the region has a length not less than a pitch of the second thread and/or the height of the head. As the second thread is milling a hole larger than the stem underneath the head, the material pressed into the hole by the head due to the countersinking of the head is accumulated in this space.

Optionally, the head is provided with a sharp circumferential edge along the periphery on the underside of the head in order for the head to cut its way into the material and, thus, smoothly enter the workpiece. The cutting edge also cuts possible wood fibres around the head so that fringing around the head in the countersunk hole is prevented.

In order to fasten a panel made of wood plastic composite onto a supporting wood structure, the screw must have a length larger than the thickness of the panel so that it can be drilled entirely through the panel with a portion of the first thread entering the underlying wood structure, so as to fasten the panel onto the support structure by the first thread.

In particular for panels used as deck for terraces and balconies, typical dimensions apply. Thicknesses are typically in the range of 5-50 mm. In the USA, a preferred thickness is 1 inch = 25.4 mm. Widths are typically in the range of 100 - 305 mm. In the USA, a preferred width is 6 inch = 152 mm. In the USA, typical standard lengths for panels for decking are 12', 16', 20' (3,7 m; 4,9 m; 6,1 m).

For reinforced panels, the plastic concentration by weight is typically in the range of 25 - 60%, but often in the range of 40 - 50 %. Typically, additives, such as colorants and lubricants make up 5 - 10 % by weight. Accordingly, a typical weight concentration of the reinforcing fibrous filler, especially wood fibers, is in the range of 40 - 65 %.

### SHORT DESCRIPTION OF THE DRAWINGS

The invention will be explained in more detail with reference to the drawing, wherein
- FIG. 1: illustrates an embodiment of a screw for WPC panels;
- FIG. 2: shows the drill point in more detail
- FIG. 3: shows the drill point in different perspectives in FIG. 3A and 3B, as well as indications for angles for different side views in FIG. 3C and 3D;
- FIG. 4: shows an alternative embodiment;
- FIG. 5: shows an alternative embodiment;
- FIG. 6: shows an alternative embodiment;
- FIG. 7: shows an enlarged drawing of a screw head;
- FIG. 8: is a photo of a screw countersunk inside a workpiece;
- FIG. 9: is a photo of a tip of a screw used in FIG. 8;
- FIG. 10: shows a prior art drill point before (FIG. 10A) and after (FIG. 10B) drilling into a WPC panel;
- FIG. 11: shows another prior art drill point before (FIG. 11A) and after (FIG. 11B) drilling into a WPC panel, as well as a drawing (FIG. 11C) of it.

### DETAILED DESCRIPTION / PREFERRED EMBODIMENT

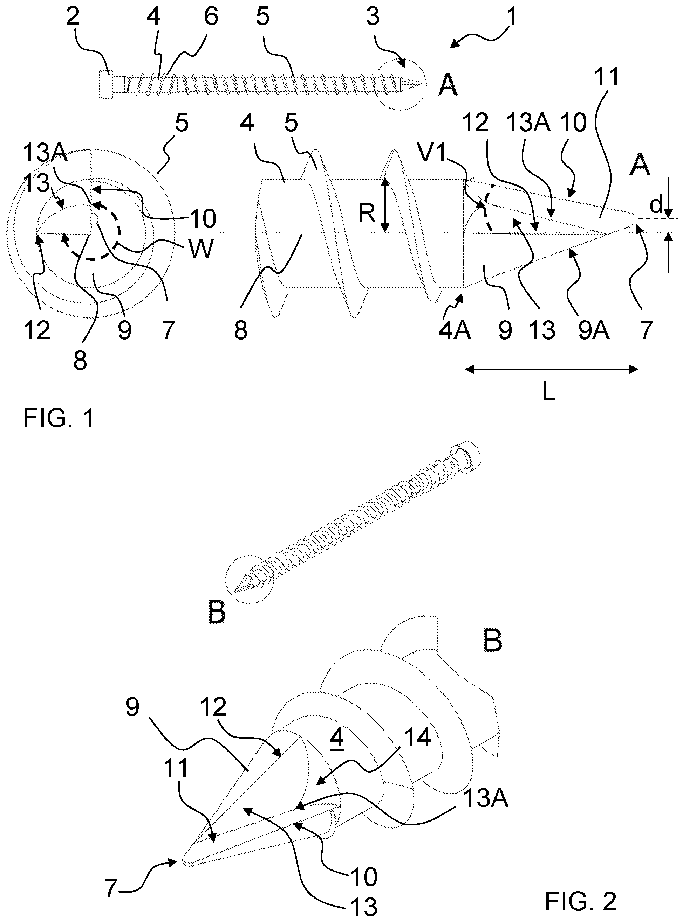

FIG. 1 illustrates a screw 1 that is especially useful for drilling through a WPC panel and for fastening it to a wooden support structure.

The screw 1 comprises a stem 4 with a screw head 2 at a first end of the stem 4 and a drill point 3 at the opposite, second end. A first thread 5 is provided around the stem 4 adjacent to the drill point 3 and configured for screwing into wood. The screw 1 also comprises a second thread 6, the helical direction of which is opposite to the first thread 5. During screwing of the screw 1 into and through the panel and into the underlying wooden support structure, the second thread 6 is pulling panel material deeper into the hole so that the entrance of the drilled hole is cleaned from chips from the screwing and drilling action.

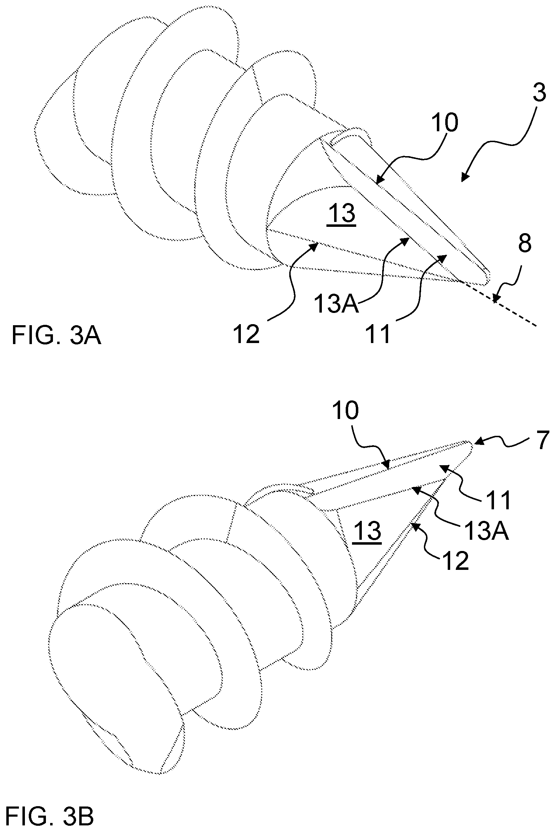

In FIG. 1 in a side view of the enlarged section A, and in FIG. 2 and 3A and 3B in perspective views of the similar enlarged section B, the drill point 3 is shown in further detail. The drill point 3 comprises a tip 7 at the foremost end of the drill point 3. The tip 7 is offset a distance d from the central axis 8 of the screw 1. The offset d is measured from the central axis 8 to the most forward point of the tip 7, which is typically a bit rounded for reason of production and mechanical stability. The ratio between the distance d and the radius R of the stem 4 is typically in the range of 0. 1-0.7. However, the possible range of d/R is as much as 0.1-0.95 or in principle even 0.1-1.0, as the eccentric tip 7 can be flush at the rim of the stem 4.

A cutting edge 10 extends from the stem 4 to the eccentric tip 7. The length of the drill point 3 is measured from the foremost point of the tip 7 to the transition 4A between the stem 4 and the drill point 3. Typically, the length L of the drill point 3 is in the range of 2-5 times the radius R of the stem 4.

A cutting face 11 extends longitudinally along the cutting edge 10 and extends transversely from the cutting edge 10 towards the central axis 8. In the direction towards the central axis 8, the cutting face 11 is delimited by an edge 13A at a second surface 13, which is illustrated as a convex curved transition surface.

In the lower left of FIG. 1, a head-on view of the drill point 3 is seen with the eccentric tip 7. Due to the fact that the tip 7 is off-centred relatively to the central line 8, the drill point 3 is not regularly conical. Instead, the drill point 3 is delimited by a tapering convex surface 9 which is a W=270-degree portion of an oblique circular cone that extends from the cutting edge 10 about the central axis 8 to a second edge 12 of the drill point 3. A second face 13 extends as a convex transition surface from the second edge 12 to the cutting face 11. The second face and the cutting face 11 form a slot 14 in the drill point 3. Accordingly, the drill point, as illustrated, is formed by the tapering convex surface 9 and the slot 14. As an alternative to the second edge 12, the transition between the second face 13 and the curved surface 9 could be smooth.

The fact that the tapering convex surface 9 extends over an angle W=270° about the central axis 8 implies that the slot 14 between the cutting edge 10 and the second edge 12 extends over 360°-W=90°.

In the shown embodiment, the drill point 3 is formed by the convex surface 9, the cutting face 10, and the second face 13 in the form of a convex transition surface. It is put forward that this is a simple construction as compared to prior art, especially when comparing with the screw in US4458229, in which various cutting surfaces are provided, requiring extensive shaping by various tools.

The angular span W of the oblique conical surface 9 is not necessarily 270 degrees but could vary to a slightly larger or smaller angle, for example in the range of 225 to 315 degrees, such as 240-315 degrees. However, if the angle becomes too large, there is a risk that the material gets accumulated in the slot 14 between the edges 10, 12, and if the angle becomes too small, sufficiently stable drilling is compromised.

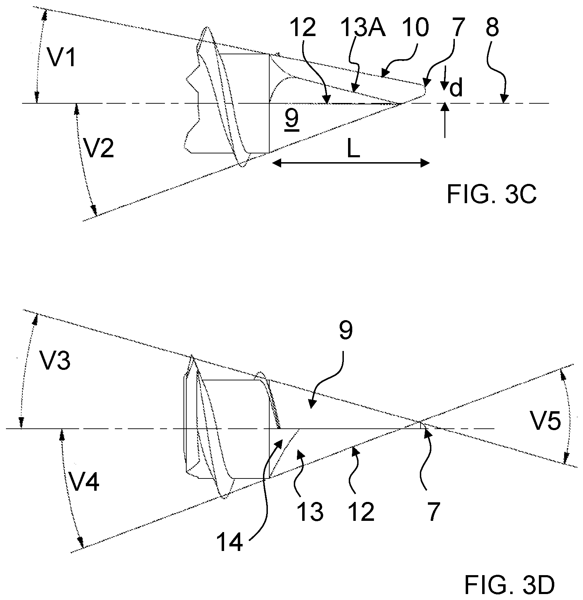

FIG. 3C illustrates a head on view onto the cutting face and indicates the angle V1 between the cutting edge 10 and the central axis 8. The angle V1 between the cutting edge 10 and the central axis 8 is determined by the radius R of the stem, the length L of the drill point 3, and the offset d of the tip 7.

As illustrated in FIG. 3D, which is a tangential view onto the second edge 12, the angle V4 between the second edge 12 and the central axis 8 is larger than V1. Due to the tapering curved surface 9 being an oblique cone and not a regular cone, the angle of the surface with the stem 4, or equivalently with the central axis 8, increases continuously from V1 to V4 and passes V2 and V3, as indicated, when moving from the cutting edge 10 to the second edge 12 in a circle about the central axis 8 and along the curved surface 9. In the shown example, the angles W=270°, V1=10°, and V4=20°.

These angles vary together with the cone angle V5 in accordance with the construction and dimensioning of the drill point 3. A few examples are shown below.

When the screw 1 is rotated about the central axis 8 during screwing, the tip 7 is moving in a circle around the central axis 8. In the initial phase, when the tip 7 is placed on the surface of the panel, the rotation of the tip 7 on a spot leads to a wiggling motion of the screw 1 and the screwing tool, as the tip 7 typically stays on a spot end drills its way through the surface of the panel. This wiggling of the screw gradually decreases, while the drill point 3 works its way through the surface and into the panel. Once, the stem 4 enters the material of the panel, and the first thread 5 gets a grip inside the panel, the wiggling of the screw 1 stops, and the threaded stem 4 guides the screw 1 axially through the material. Due to the further linear forward motion of the screw 1, the tip 7 moves in a circle around the central axis 8 and spirals through the material during advance of the screw 1. The combination of the spiralling tip 7 and the cutting edge 10 results in a working through the material, which is a combination of drilling and milling, which has turned out to be surprisingly efficient.

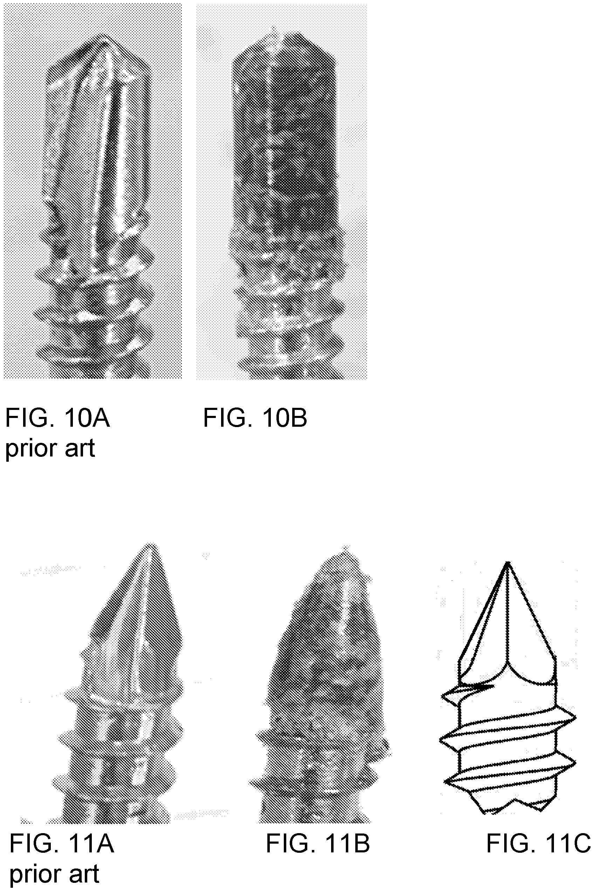

The advantage of the eccentric tip of the drill point 3 is best understood with reference to some preliminary studies that were made with some prior art screws available on the market. FIG. 10A illustrates a photo of a prior art screw with a centred drill point at the end of the screw. This drill point was attempted screwed into a WPC panel, which, however, did not work out. The screw became hot, and the polymer melted around the tip, as shown in the photo of FIG. 10B, and the polymer got attached to the bit to an extent that further drilling was prevented. As shown in the photo of FIG. 11B, a similar failure was observed for a screw of the type shown in FIG. 11A, a drawing of which is shown in FIG. 11C.

In contrast to such prior art screws, the screw with its eccentric tip in the drill point, as described above, drilled efficiently through the WPC panel used in the experiments.

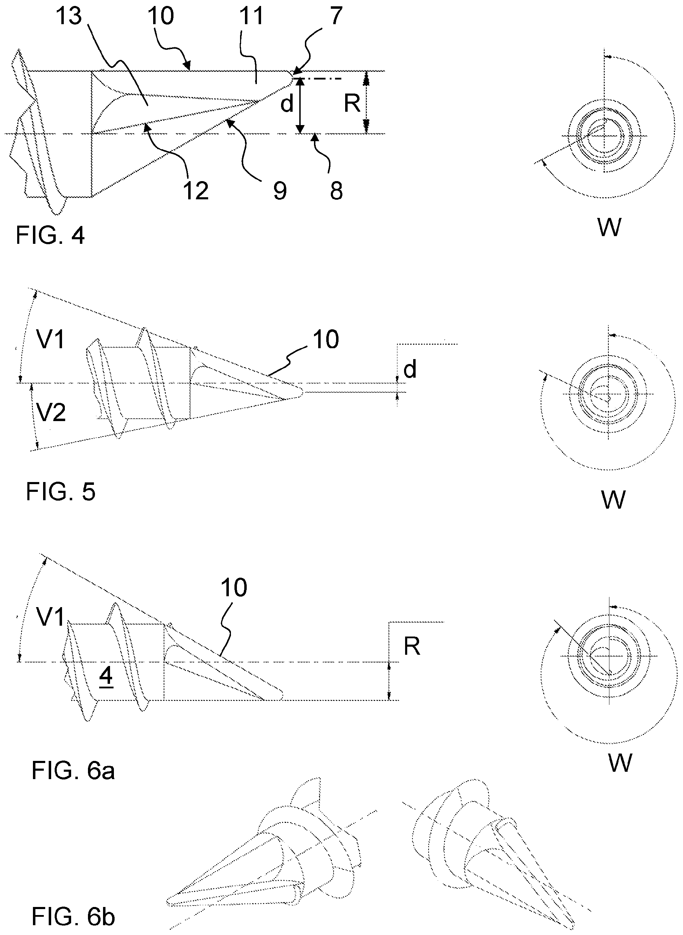

FIG. 4 illustrates a different embodiment, where the cutting edge 10 is parallel with the central axis 8 and the tip 7 has a distance d from the central axis close to the radius R of the stem 4, for example 0.95·R. In order for the tip 7 to be flush with the stem 4, the tip 7 would have to be asymmetric and sharp-edged. However, in practice, the tip 7 is advantageously slightly rounded for reason of strength and also due to ease of production. In this case, the second edge 12 is not parallel to the central axis 8, as this would result is a very broad cutting face 11, which is typically not desired. In the exemplified embodiment, W=240°.

FIG. 5 illustrates an alternative embodiment in which the angle V1 is larger than in FIG. 3C and the drill point is on the opposite side of the central axis R. For example, in this illustration, V1=20°, V2=11°, and W=295°.

FIG. 6a and FIG. 6b illustrate a further alternative embodiment in which the angle V1 is larger than in FIG. 3C and the drill point is on the opposite side of the central axis R. The cutting edge 11 extends skew to a line parallel with the stem 4. For example, in this illustration, V1=30°, V2=0°, and W=315°.

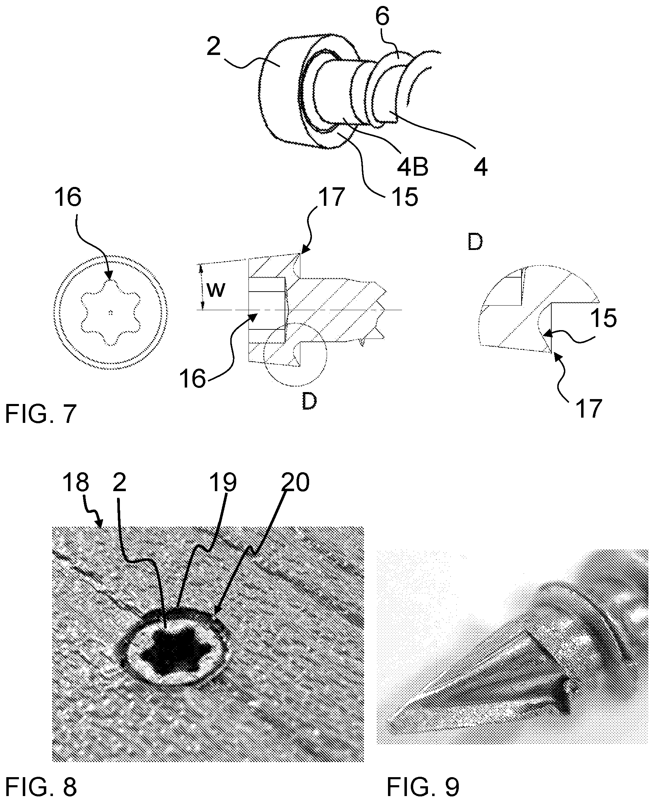

FIG. 7 illustrates the head 2 of the screw 1, which comprises a recess 16 for receiving a tool, typically a tool marketed under the trade name Torx^{®}. The underside of the head 2 comprises a sharp edge 17 at the end of a conical surface 15. The sharp edge 17 around the rim of the head 2 at the underside of the head 2 facilitates the countersinking of the screw head 2. Due to the reverse thread 6, the hole in the panel just below the head 2 would become wider than the stem 4 when the screw is driven through the panel so that material of the panel as cut by the edge 17 into chips and then pressed into the hole by head during countersinking would accumulate in the volume around the stem 4 just below the head 2.

An example of a screw head 2 according to the invention countersunk in a WPC panel 18 is shown in the photo of FIG. 8. It is observed that the rim 19 of the hole 20 is cut clean so that no chips or fringes extend out of the hole 20. FIG. 9 is a photo of a tip of a produced screw used in FIG. 8.

In the exemplified screw, dimensions were as follows mm:
Length of screw: 70 mm
Length of first thread: 50 mm
Length of second thread 15 mm
Stem diameter at first thread: 3 mm
Outer diameter of first thread: 5 mm
Outer diameter of second thread: 5.3 mm
Stem diameter between second thread and head: 4 mm
Pitch of second thread: 2.5 mm
Diameter of head: 7 mm
Length of drill point: 5 mm
Distance of tip from central axis: 0.4 (27% of stem radius R)
Angle w of head: 6 degrees
Angles between central axis and cutting edge: 11 degrees

However, the dimensions can be varied according to the needs, for example with in the following ranges:
Length of screw: 20-150mm
Length of first thread: 10-90mm
Length of second thread: 3-40mm
Stem diameter at first thread: 2-6mm
Outer diameter of first thread: 3-8 mm
Outer diameter of second thread: 3.5-10 mm
Stem diameter between second thread and head: 2-8 mm
Pitch of first thread: 0.8-6mm
Pitch of second thread: 1-6mm
Diameter of head: 4-15 mm
Length of drill point: 3-10 mm
Angle w of head: 0-25 degrees
Angles between central axis and cutting edge: 0-60 degrees
Eccentric distance of tip from central axis: 10-100% of stem Radius, however, typically 10-95% of R due to rounded tip.

### Reference numbers

1 screw
2 screw head
3 drill point
4 stem
4A transition between stem 4 and drill point 3
4B region of stem 4 without thread underneath the screw head 2
5 first thread
6 second thread
7 tip of drill point 3
8 central axis
9 convex surface, e.g. shaped as part of oblique circular cone
10 cutting edge
11 cutting face
12 second edge
13 second face, for example convex transition surface
13A edge between cutting face 11 and second surface 13
14 slot between edges 10 and 12
15 conical surface on underside of screw head 2
16 recess for tool in screw head 2
17 sharp edge around rim at the underside of the screw head 2
18 WPC panel
19 rim of hole 20 in WPC panel 18
20 hole in WPC panel 18

## Claims

1. A screw (1) for drilling and screwing through a workpiece (18) of a plastic or wood plastic composite, wherein the screw (1) has a central longitudinal axis (8) and comprises a stem (4) with a screw head (2) at a first end and a drill point (3) at an opposite second end and a first thread (5) around the stem (4), wherein the first thread (5) is adjacent to the drill point (3) and configured for screwing into and through the workpiece (18) after pre-drilling with the drill point (3), wherein the drill point (3) comprises a foremost tip (7) for initial workpiece (18) contact during start of drilling and screwing into the workpiece (18),
wherein the tip (7) is eccentrically displaced from the central axis (8).
wherein the drill point (3) comprises
- a cutting edge (10) extending from the tip (7) to the stem (4) and a cutting face (11) extending from the cutting edge (10) inwards towards an inner part of the drill point (3) and forming a first side of a slot (14) in the drill point (3), the cutting face (11) being configured for working the workpiece (18) during drilling and screwing of the screw (1) in the workpiece (18),
- a convex curved outer surface (9) tapering along the drill point (3) from the stem (4) to the tip (7) and extending over an angle of no less than 225 degrees and no more than 330 degrees about the central axis (8) as measured from the cutting edge (10),
- a second face (13) extending from the curved outer surface (9) inwards and to the cutting face (11) and forming a second side of the slot (14);
**characterised in that** the cutting face (11) is planar and parallel to the central axis and extends laterally from the cutting edge (10) radially inwards towards the central axis (8) and to the central axis so as to follow a plane that contains the central axis (8).

2. A screw according to claim 1, wherein the drill point (3) comprises only a single tip (7) and a single cutting face (11).

3. A screw according to claim 1 or 2, wherein the convex surface (9) tapering from the stem (4) to the tip (7) is formed as a part of an oblique circular cone ending at the tip.

4. A screw according to any preceding claims, wherein the cutting edge (10) extends to the central axis (12) but does not cross the central axis (12) and does not extend to the opposite side of the central axis (12).

5. A screw according to any preceding claim, wherein the second face (13) is smoothly convex.

6. A screw according to any preceding claim, wherein the stem (4) is cylindrical with a circular cross section and wherein the first thread (5) is circular when projected onto a plane perpendicular to the central axis (8).

7. A screw according to any preceding claim, wherein the tapering convex curved outer surface (9) extends over an angle W in the range of 240 to 315 degrees and the slot (14) extends over an angle of 360-W.

8. A screw according to any preceding claim, wherein the screw (1) comprises a second thread (6) between the first thread (5) and the screw head (2), the second thread (6) having a helical direction opposite to the first thread (5) and is configured for pulling material from the drilled hole deeper into the workpiece (18) during screwing of the screw (1) through the workpiece (18).

9. A screw according to claim 8, wherein the second thread (6) has an outer diameter larger than the outer diameter of the first thread (5).

10. A screw according to claim 8 or 9, wherein the stem (4) comprises a region (4B) without thread between the head (2) and the second thread (6), the region (4B) having a diameter smaller than the outer diameter of the second thread (6) and a length not less than at least one of a pitch of the second thread (6) and the height of the screw head (2).

11. A screw according to claim 1, wherein the convex surface (9) tapering from the stem (4) to the tip (7) is formed as a part of an oblique circular cone, wherein the tapering convex curved outer surface (9) extends over an angle W in the range of 240 to 315 degrees and the slot (14) extends over an angle of 360-W; wherein the drill point (3) comprises only a single tip (7) and a single cutting face (11), wherein the second face (13) is smoothly convex, wherein the stem (4) is cylindrical with a circular cross section, wherein the screw (1) comprises a second thread (6) between the first thread (5) and the screw head (2), the second thread (6) having a helical direction opposite to the first thread (5) and is configured for pulling material from the drilled hole deeper into the workpiece (18) during screwing of the screw (1) through the workpiece (18), wherein the second thread (6) has an outer diameter larger than the outer diameter of the first thread (5).

12. Use of a screw according to any preceding claim for fastening a workpiece in the form of a panel made of plastic or a wood-plastic composite onto a wooden support structure, in particular for providing an outdoor deck on a terrace or balcony.

13. Method of fastening a workpiece (18) made of wood plastic composite on an underlying wooden support, the method comprising providing a support structure made of wood, placing the workpiece (18) against the support structure, providing a screw (1) according to anyone of the claims 1-11 with a length larger than the thickness of the workpiece (18); wherein the method comprises drilling the screw (1) through the workpiece (18) and screwing the screw (1) with a portion of the first thread (5) into the underlying wood structure and fastening the workpiece (18) onto the underlying support structure by the first thread (5), continuing advancing the screw (1) by rotation, until the screw head (2) is countersunk in the workpiece (18).

14. A method according to claim 13, wherein the screw (1) comprises a second thread (6) between the first thread (5) and the screw head (2), the second thread (6) having a helical direction opposite to the first thread (5) and wherein the method comprises pulling material from the drilled hole by the second thread deeper into the workpiece (18) during advancing of the screw (1) through the workpiece (18).

15. Method of decking a terrace or balcony by workpieces (18) which are plastic composite panels that contain a reinforcing material in a plastic matrix, for example wood plastic composite panels, or which are plastic panels without containing reinforcing material, the method comprising providing an underlying support structure made of wood, placing the panel (18) on top of the support structure, providing a screw (1) according to anyone of the claims 1-11 with a length larger than the thickness of the panel (18); wherein the method comprises drilling the screw (1) through the panel (18) and screwing the screw (1) with a portion of the first thread (5) into the underlying wood structure and fastening the panel (18) onto the underlying support structure by the first thread (5), continuing advancing the screw (1) by rotation, until the screw head (2) is countersunk in the panel (18).

16. A method according to claim 15, wherein the screw (1) comprises a second thread (6) between the first thread (5) and the screw head (2), the second thread (6) having a helical direction opposite to the first thread (5) and wherein the method comprises pulling material from the drilled hole by the second thread deeper into the panel (18) during advancing of the screw (1) through the panel (18).

## Patentansprüche

1. Schraube (1) zum Bohren und Schrauben durch ein Werkstück (18) aus einem Kunststoff- oder Holz-Kunststoff-Verbundwerkstoff, wobei die Schraube (1) eine Mittellängsachse (8) aufweist und einen Schaft (4) mit einem Schraubenkopf (2) an einem ersten Ende und einer Bohrerspitze (3) an einem gegenüberliegenden zweiten Ende und ein erstes Gewinde (5) um den Schaft (4) aufweist, wobei das erste Gewinde (5) benachbart zu die Bohrerspitze (3) liegt und zum Schrauben in und durch das Werkstück (18) nach einem Vorbohren mit der Bohrerspitze (3) konfiguriert ist, wobei die Bohrerspitze (3) eine vorderste Spitze (7) für einen ersten Kontakt mit dem Werkstück (18) während des Beginns des Bohrens und Schraubens in das Werkstück (18) umfasst,
wobei die Spitze (7) exzentrisch von der Mittelachse (8) versetzt ist,
wobei die Bohrerspitze (3) Folgendes umfasst:
eine Schneidkante (10), die sich von der Spitze (7) zu dem Schaft (4) erstreckt, und eine Schneidfläche (11), die sich von der Schneidkante (10) nach innen in Richtung eines inneren Teils der Bohrerspitze (3) erstreckt und eine erste Seite eines Schlitzes (14) in der Bohrerspitze (3) ausbildet, wobei die Schneidfläche (11) zum Bearbeiten des Werkstücks (18) während des Bohrens und Schraubens der Schraube (1) in das Werkstück (18) konfiguriert ist,
eine konvex gekrümmte Außenfläche (9), die sich entlang der Bohrerspitze (3) von dem Schaft (4) zu der Spitze (7) hin verjüngt und sich über einen Winkel von nicht weniger als 225 Grad und nicht mehr als 330 Grad um die Mittelachse (8), gemessen von der Schneidkante (10), erstreckt,
eine zweite Fläche (13), die sich von der gekrümmten Außenfläche (9) nach innen und zu der Schneidfläche (11) erstreckt und eine zweite Seite des Schlitzes (14) ausbildet;
**dadurch gekennzeichnet, dass** die Schneidfläche (11) eben und parallel zu der Mittelachse ist und sich seitlich von der Schneidkante (10) radial nach innen in Richtung der Mittelachse (8) und so zu der Mittelachse erstreckt, dass sie einer Ebene folgt, die die Mittelachse (8) enthält.

2. Schraube nach Anspruch 1, wobei die Bohrerspitze (3) nur eine einzige Spitze (7) und eine einzige Schneidfläche (11) umfasst.

3. Schraube nach Anspruch 1 oder 2, wobei die konvexe Fläche (9), die sich von dem Schaft (4) zu der Spitze (7) hin verjüngt, als Teil eines schrägen Kreiskegels, der an der Spitze endet, ausgebildet ist.

4. Schraube nach einem der vorhergehenden Ansprüche, wobei sich die Schneidkante (10) zu der Mittelachse (12) erstreckt, aber die Mittelachse (12) nicht kreuzt und sich nicht zu der gegenüberliegenden Seite der Mittelachse (12) erstreckt.

5. Schraube nach einem der vorhergehenden Ansprüche, wobei die zweite Fläche (13) leicht konvex ist.

6. Schraube nach einem der vorhergehenden Ansprüche, wobei der Schaft (4) zylindrisch mit einem kreisförmigen Querschnitt ist und wobei das erste Gewinde (5) kreisförmig ist, wenn es auf eine Ebene projiziert wird, die senkrecht zu der Mittelachse (8) ist.

7. Schraube nach einem der vorhergehenden Ansprüche, wobei sich die sich verjüngende konvex gekrümmte Außenfläche (9) über einen Winkel W in der Größenordnung von 240 bis 315 Grad erstreckt und sich der Schlitz (14) über einen Winkel von 360-W erstreckt.

8. Schraube nach einem der vorhergehenden Ansprüche, wobei die Schraube (1) ein zweites Gewinde (6) zwischen dem ersten Gewinde (5) und dem Schraubenkopf (2) umfasst, wobei das zweite Gewinde (6) eine dem ersten Gewinde (5) entgegengesetzte Schraubenrichtung aufweist und dazu konfiguriert ist, beim Schrauben der Schraube (1) durch das Werkstück (18) Material aus dem gebohrten Loch tiefer in das Werkstück (18) zu ziehen.

9. Schraube nach Anspruch 8, wobei das zweite Gewinde (6) einen Außendurchmesser aufweist, der größer ist als der Außendurchmesser des ersten Gewindes (5).

10. Schraube nach Anspruch 8 oder 9, wobei der Schaft (4) einen Bereich (4B) ohne Gewinde zwischen dem Kopf (2) und dem zweiten Gewinde (6) umfasst, wobei der Bereich (4B) einen Durchmesser aufweist, der kleiner ist als der Außendurchmesser des zweiten Gewindes (6), und eine Länge aufweist, die nicht kleiner ist als mindestens eine von einer Steigung des zweiten Gewindes (6) und der Höhe des Schraubenkopfes (2).

11. Schraube nach Anspruch 1, wobei die konvexe Fläche (9), die sich von dem Schaft (4) zu der Spitze (7) hin verjüngt, als Teil eines schrägen Kreiskegels ausgebildet ist, wobei sich die sich verjüngende konvex gekrümmte Außenfläche (9) über einen Winkel W in der Größenordnung von 240 bis 315 Grad erstreckt und sich der Schlitz (14) über einen Winkel von 360-W erstreckt; wobei die Bohrerspitze (3) nur eine einzige Spitze (7) und eine einzige Schneidfläche (11) umfasst, wobei die zweite Fläche (13) leicht konvex ist, wobei der Schaft (4) zylindrisch mit einem kreisförmigen Querschnitt ist, wobei die Schraube (1) ein zweites Gewinde (6) zwischen dem ersten Gewinde (5) und dem Schraubenkopf (2) umfasst, wobei das zweite Gewinde (6) eine dem ersten Gewinde (5) entgegengesetzte Schraubenrichtung aufweist und dazu konfiguriert ist, während des Schraubens der Schraube (1) durch das Werkstück (18) Material aus dem gebohrten Loch tiefer in das Werkstück (18) zu ziehen, wobei das zweite Gewinde (6) einen Außendurchmesser aufweist, der größer ist als der Außendurchmesser des ersten Gewindes (5).

12. Verwendung einer Schraube nach einem der vorhergehenden Ansprüche zum Befestigen eines Werkstücks in Form eines Paneels aus Kunststoff oder einem Holz-Kunststoff-Verbundwerkstoff auf einer hölzernen Trägerkonstruktion, insbesondere zu Bereitstellen eines Außendecks auf einer Terrasse oder einem Balkon.

13. Verfahren zum Befestigen eines Werkstücks (18) aus Holz-Kunststoff-Verbundwerkstoff auf einem darunterliegenden hölzernen Träger, wobei das Verfahren Bereitstellen einer Trägerkonstruktion aus Holz, Platzieren des Werkstücks (18) an der Trägerkonstruktion, Bereitstellen einer Schraube (1) nach einem der Ansprüche 1-11 mit einer Länge, die größer als die Dicke des Werkstücks (18) ist, umfasst; wobei das Verfahren Bohren der Schraube (1) durch das Werkstück (18) und Schrauben der Schraube (1) mit einem Abschnitt des ersten Gewindes (5) in die darunterliegende Holzkonstruktion und Befestigen des Werkstücks (18) auf der darunterliegenden Trägerkonstruktion durch das erste Gewinde (5) umfasst, wobei die Schraube (1) durch Drehung weiter vorwärts bewegt wird, bis der Schraubenkopf (2) in dem Werkstück (18) versenkt ist.

14. Verfahren nach Anspruch 13, wobei die Schraube (1) ein zweites Gewinde (6) zwischen dem ersten Gewinde (5) und dem Schraubenkopf (2) umfasst, wobei das zweite Gewinde (6) eine dem ersten Gewinde (5) entgegengesetzte Schraubenrichtung aufweist und wobei das Verfahren Ziehen von Material aus dem gebohrten Loch durch das zweite Gewinde tiefer in das Werkstück (18) während des Vorwärtsbewegens der Schraube (1) durch das Werkstück (18) umfasst.

15. Verfahren zum Abdecken einer Terrasse oder eines Balkons mit Werkstücken (18), bei denen es sich um Paneele aus Kunststoffverbundwerkstoff handelt, die ein Verstärkungsmaterial in einer Kunststoffmatrix enthalten, beispielsweise Paneele aus Holz-Kunststoff-Verbundwerkstoff, oder bei denen es sich um Kunststoffpaneele handelt, die kein Verstärkungsmaterial enthalten, wobei das Verfahren Bereitstellen einer darunterliegenden Trägerkonstruktion aus Holz, Platzieren des Paneels (18) auf der Trägerkonstruktion, Bereitstellen einer Schraube (1) nach einem der Ansprüche 1-11 mit einer Länge, die größer ist als die Dicke des Paneels (18), umfasst; wobei das Verfahren Bohren der Schraube (1) durch das Paneel (18) und Schrauben der Schraube (1) mit einem Abschnitt des ersten Gewindes (5) in die darunterliegende Holzkonstruktion und Befestigen des Paneels (18) auf der darunterliegenden Trägerkonstruktion durch das erste Gewinde (5) umfasst, wobei die Schraube (1) durch Drehung weiter vorwärts bewegt wird, bis der Schraubenkopf (2) in dem Paneel (18) versenkt ist.

16. Verfahren nach Anspruch 15, wobei die Schraube (1) ein zweites Gewinde (6) zwischen dem ersten Gewinde (5) und dem Schraubenkopf (2) umfasst, wobei das zweite Gewinde (6) eine dem ersten Gewinde (5) entgegengesetzte Schraubenrichtung aufweist und wobei das Verfahren Ziehen von Material aus dem gebohrten Loch durch das zweite Gewinde tiefer in das Paneel (18) während des Vorwärtsbewegens der Schraube (1) durch das Paneel (18) umfasst.

## Revendications

1. Vis (1) pour le perçage et le vissage à travers une pièce (18) en plastique ou en composite bois-plastique, dans laquelle la vis (1) présente un axe longitudinal central (8) et comprend une tige (4) munie d'une tête de vis (2) à une première extrémité et d'une pointe de perçage (3) à une seconde extrémité opposée, ainsi qu'un premier filet (5) autour de la tige (4), dans laquelle le premier filet (5) est adjacent à la pointe de perçage (3) et configuré pour le vissage dans et à travers la pièce (18) après pré-perçage avec la pointe de perçage (3), dans laquelle la pointe de perçage (3) comprend une pointe avant (7) pour un contact initial avec la pièce (18) au début du perçage et du vissage dans la pièce (18),
dans laquelle la pointe (7) est déplacée de manière excentrique par rapport à l'axe central (8),
dans laquelle la pointe de perçage (3) comprend
- un bord tranchant (10) se prolongeant de la pointe (7) à la tige (4) et une face tranchante (11) se prolongeant à partir du bord tranchant (10) vers l'intérieur en direction d'une partie intérieure de la pointe de perçage (3) et formant un premier côté d'une fente (14) dans la pointe de perçage (3), la face tranchante (11) étant configurée pour usiner la pièce (18) pendant le perçage et le vissage de la vis (1) dans la pièce (18),
- une surface extérieure incurvée convexe (9) s'effilant le long de la pointe de perçage (3) de la tige (4) à la pointe (7) et se prolongeant sur un angle supérieur ou égal à 225 degrés et inférieur ou égal à 330 degrés autour de l'axe central (8) tel que mesuré à partir du bord tranchant (10),
- une seconde face (13) se prolongeant à partir de la surface extérieure incurvée (9) vers l'intérieur et jusqu'à la face tranchante (11) et formant un second côté de la fente (14) ;
**caractérisée en ce que** la face tranchante (11) est plane et parallèle à l'axe central et se prolonge latéralement à partir du bord tranchant (10) radialement vers l'intérieur en direction de l'axe central (8) et jusqu'à l'axe central de manière à suivre un plan qui contient l'axe central (8).

2. Vis selon la revendication 1, dans laquelle la pointe de perçage (3) ne comprend qu'une seule pointe (7) et qu'une seule face tranchante (11).

3. Vis selon la revendication 1 ou 2, dans laquelle la surface convexe (9) s'effilant de la tige (4) à la pointe (7) est formée comme une partie d'un cône circulaire oblique se terminant au niveau de la pointe.

4. Vis selon une quelconque revendication précédente, dans laquelle le bord tranchant (10) se prolonge jusqu'à l'axe central (12) mais ne traverse pas l'axe central (12) et ne se prolonge pas jusqu'au côté opposé de l'axe central (12).

5. Vis selon une quelconque revendication précédente, dans laquelle la seconde face (13) est légèrement convexe.

6. Vis selon une quelconque revendication précédente, dans laquelle la tige (4) est cylindrique avec une section transversale circulaire et dans laquelle le premier filet (5) est circulaire lorsqu'il est projeté sur un plan perpendiculaire à l'axe central (8).

7. Vis selon une quelconque revendication précédente, dans laquelle la surface extérieure incurvée convexe affilée (9) se prolonge sur un angle W dans la plage allant de 240 à 315 degrés et la fente (14) se prolonge sur un angle de 360° - W.

8. Vis selon une quelconque revendication précédente, dans laquelle la vis (1) comprend un second filet (6) entre le premier filet (5) et la tête de vis (2), le second filet (6) présentant une direction hélicoïdale opposée au premier filet (5) et étant configuré pour retirer le matériau du trou percé plus profondément dans la pièce (18) pendant le vissage de la vis (1) à travers la pièce (18).

9. Vis selon la revendication 8, dans laquelle le second filet (6) a un diamètre extérieur plus grand que le diamètre extérieur du premier filet (5).

10. Vis selon la revendication 8 ou 9, dans laquelle la tige (4) comprend une région (4B) sans filet entre la tête (2) et le second filet (6), la région (4B) présentant un diamètre inférieur au diamètre extérieur du second filet (6) et une longueur supérieure ou égale à au moins l'un d'un pas du second filet (6) et de la hauteur de la tête de vis (2).

11. Vis selon la revendication 1, dans laquelle la surface convexe (9) s'effilant de la tige (4) à la pointe (7) est formée comme une partie d'un cône circulaire oblique, dans laquelle la surface extérieure incurvée convexe effilée (9) se prolonge sur un angle W dans la plage allant de 240 à 315 degrés et la fente (14) se prolonge sur un angle de 360 - W ; dans laquelle la pointe de perçage (3) ne comprend qu'une seule pointe (7) et qu'une seule face tranchante (11), dans laquelle la seconde face (13) est légèrement convexe, dans laquelle la tige (4) est cylindrique avec une section transversale circulaire, dans laquelle la vis (1) comprend un second filet (6) entre le premier filet (5) et la tête de vis (2), le second filet (6) présentant une direction hélicoïdale opposée au premier filet (5) et étant configuré pour retirer le matériau du trou percé plus profondément dans la pièce (18) pendant le vissage de la vis (1) à travers la pièce (18), dans laquelle le second filet (6) a un diamètre extérieur plus grand que le diamètre extérieur du premier filet (5).

12. Utilisation d'une vis selon une quelconque revendication précédente pour la fixation d'une pièce sous forme de panneau en matière plastique ou en composite bois-plastique sur une structure de support en bois, en particulier pour la fourniture d'un pont extérieur sur une terrasse ou un balcon.

13. Procédé de fixation d'une pièce (18) en composite bois-plastique sur un support en bois sous-jacent, le procédé comprenant la fourniture d'une structure de support en bois, la mise en place de la pièce (18) contre la structure de support, la fourniture d'une vis (1) selon l'une quelconque des revendications 1 à 11 présentant une longueur supérieure à l'épaisseur de la pièce (18) ; dans lequel le procédé comprend le perçage de la vis (1) à travers la pièce (18) et le vissage de la vis (1) avec une partie du premier filet (5) dans la structure en bois sous-jacente et la fixation de la pièce (18) sur la structure de support sous-jacente par le premier filet (5), la poursuite de l'avancement de la vis (1) par rotation, jusqu'à ce que la tête de vis (2) soit fraisée dans la pièce (18).

14. Procédé selon la revendication 13, dans lequel la vis (1) comprend un second filet (6) entre le premier filet (5) et la tête de vis (2), le second filet (6) présentant une direction hélicoïdale opposée au premier filet (5) et dans lequel le procédé comprend le retrait du matériau du trou percé par le second filet plus profondément dans la pièce (18) pendant l'avancement de la vis (1) à travers la pièce (18).

15. Procédé de pose d'une terrasse ou d'un balcon à l'aide de pièces (18) qui sont des panneaux composites en plastique qui contiennent un matériau de renforcement dans une matrice en plastique, par exemple des panneaux composites en bois-plastique, ou qui sont des panneaux en plastique qui ne contiennent pas de matériau de renforcement, le procédé comprenant la fourniture d'une structure de support sous-jacente en bois, la mise en place du panneau (18) sur le dessus de la structure de support, la fourniture d'une vis (1) selon l'une quelconque des revendications 1 à 11 présentant une longueur supérieure à l'épaisseur du panneau (18) ; dans lequel le procédé comprend le perçage de la vis (1) à travers le panneau (18) et le vissage de la vis (1) avec une partie du premier filet (5) à l'intérieur de la structure en bois sous-jacente et la fixation du panneau (18) sur la structure de support sous-jacente par le premier filet (5), la poursuite de l'avancement de la vis (1) par rotation, jusqu'à ce que la tête de vis (2) soit fraisée dans le panneau (18).

16. Procédé selon la revendication 15, dans lequel la vis (1) comprend un second filet (6) entre le premier filet (5) et la tête de vis (2), le second filet (6) présentant une direction hélicoïdale opposée au premier filet (5) et dans lequel le procédé comprend le retrait du matériau du trou percé par le second filet plus profondément dans le panneau (18) pendant l'avancement de la vis (1) à travers le panneau (18).
